# EUROPEAN PATENT SPECIFICATION

(11) **EP 1 326 362 B1**
(45) Date of publication and mention of the grant of the patent: **02.02.2005**
(21) Application number: 01310763.6
(22) Date of filing: 21.12.2001
(51) Int. Cl.: H04L 1/20, H04L 1/24, H04B 10/08, G01M 11/00

(54) **Accelerated measurement of bit error ratio**
Beschleunigte Bitfehlerratenmessung
Mésure du taux d'erreurs accéléré

(43) Date of publication of application: 09.07.2003
(73) Proprietor: Agilent Technologies, Inc. (a Delaware corporation), Palo Alto, CA 94303 (US); Nortel Networks Limited, St. Laurent, Quebec H4S 2A9 (CA)
(72) Inventor: Reynolds, Alastair Scott, West Lothian EH49 6QA (GB); Young, Ivan R., West Lothian EH29 9AP (GB); Pattison, Allister Nortel Networks (N.Ireland), Newtownabbey County Antrim BT36 6XA (IE); O'Neill, Peter, Belfast BT8 6YL (IE)
(74) Representative: Coker, David Graeme

(56) References cited:
- EP-A- 0 903 874
- PALACHARLA P ET AL: "Techniques for accelerated measurement of low bit error rates in computer data links" COMPUTERS AND COMMUNICATIONS, 1995., CONFERENCE PROCEEDINGS OF THE 1995 IEEE FOURTEENTH ANNUAL INTERNATIONAL PHOENIX CONFERENCE ON SCOTTSDALE, AZ, USA 28-31 MARCH 1995, NEW YORK, NY, USA,IEEE, US, 28 March 1995 (1995-03-28), pages 184-190, XP010149389 ISBN: 0-7803-2492-7
- WEINERT C M: "BER evaluation for optical signals with combined EDFA and interference noise" BROADBAND COMMUNICATIONS, 2000. PROCEEDINGS. 2000 INTERNATIONAL ZURICH SEMINAR ON ZURICH, SWITZERLAND 15-17 FEB. 2000, PISCATAWAY, NJ, USA,IEEE, US, 15 February 2000 (2000-02-15), pages 85-87, XP010376442 ISBN: 0-7803-5977-1
- JIANYING ZHOU; CHROSTOWSKI J ; MYSLINSKI P: "Measurements of very low bit-error rates of optical switches based on semiconductor optical amplifiers " IEEE PHOTONICS TECHNOL. LETTERS. , vol. 9, no. 8, August 1997 (1997-08), pages 1131-1133, XP002200792
- PATENT ABSTRACTS OF JAPAN vol. 1999, no. 11, 30 September 1999 (1999-09-30) & JP 11 153514 A (HITACHI LTD), 8 June 1999 (1999-06-08)

## Description

### Technical Field

This invention relates to measurement of bit error ratio (BER) in data transmission components and systems, and in particular to methods and apparatus for accelerating measurement of BER for components and systems which have a relatively low value of this parameter.

### Background Art

In designing, manufacturing, deploying and maintaining data transmission systems, it is important to be able to test and measure various operational parameters. The accuracy of the measurements must be sufficient for the purpose for which they are made, but it is also desirable for the time taken for each measurement to be as short as possible, both for the sake of speed of the process involving the measurement and to ensure the measurement is available when it is required.

One fundamental measurement in digital data transmission systems is bit error rate or ratio (BER), which is the number of erroneous bits in a digital data stream divided by the total number of bits transmitted, received, or processed over some stipulated period. As the data rate of transmission systems increases, it is typically necessary to reduce the BER of the system, so that the absolute number of errors does not also increase to an unacceptable level.

However, this in turn raises a problem with reliable measurement of BER at very low error ratios. In order to obtain a statistically meaningful and therefore useful measurement, it may be necessary to wait a prohibitive length of time until sufficient errors have occurred and been measured. For example, at a data rate of 10 Gb/s and a BER of 10⁻¹⁴, a measurement requiring accumulation of 15 errors may take over a day and half to complete.

### Disclosure of Invention

According to one aspect of this invention there is provided a method of measuring bit error ratio of digital data transmission equipment, comprising the steps of
:applying a bit error ratio test data stream to a signal path through the equipment;
coupling an interfering signal source into the signal path;
acquiring a plurality of measurements of the bit error ratio of the equipment for a respective plurality of interfering signal levels; and
estimating the bit error ratio of the equipment in the absence of the interfering signal, from the plurality of measurements of the bit error ratio and incorporating compensation for gain error introduced by coupling the interfering signal source into the signal path.

### Brief Description of Drawings

A method and apparatus in accordance with this invention, for measuring BER at very low error ratios, will now be described, by way of example, with reference to the accompanying drawings, in which:
- Figure 1: is a block schematic diagram of a known arrangement for measuring BER at very low error ratios; and
- Figure 2: is a block schematic diagram of an arrangement for making such measurements in accordance with this invention.

### Best Mode for Carrying Out the Invention, & Industrial Applicability

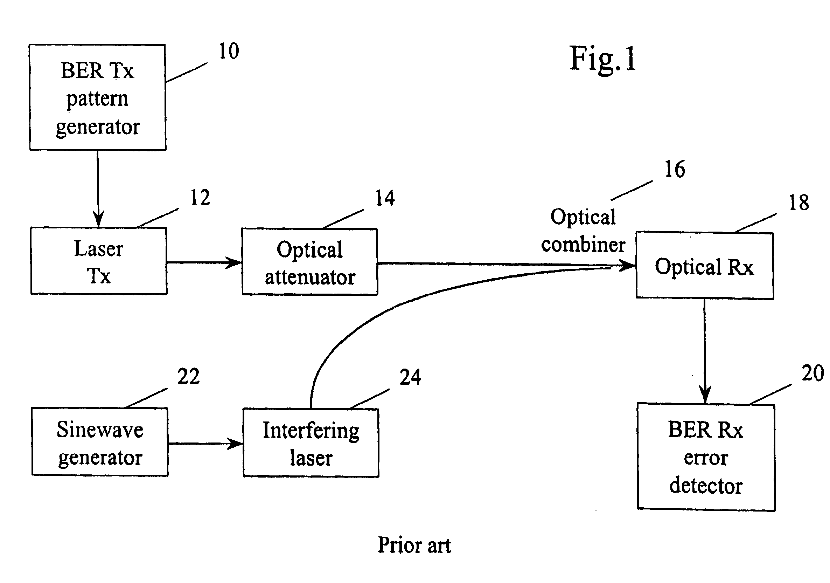

Figure 1 shows an arrangement for accelerated measurement of BER in digital optical transmission systems, using a sinusoidal interference method. This method is described in more detail by P. Palacharla, J. Chrostowski, R. Neumann, and R.J. Gallenberger in paper entitled "Techniques for accelerated measurement of low bit error ratios in computer data links", *Proceedings of the IEEE Fourteenth Annual International Phoenix Conference on Computers and Communications,* Scottsdale, AZ, March 28-31, 1995, at pages 184-190, and in Standards Proposal No. 3696 dated May 26, 2000 of the Telecommunications Industry Association, "Accelerated Measurement of BER and Q-Factor in Digital Optical Transmission Systems Using the Sinusoidal Interference Method".

Referring to Figure 1, a BER transmission pattern generator 10 supplies a test data signal to a laser transmitter 12. The optical output of the laser 12 is passed through an optical attenuator 14 and an optical combiner 16 to a photodiode optical receiver 18. The electrical output signal from the photodiode 18 is supplied to a BER receiver and error detector 20, which operates in known manner to derive a desired measurement of the BER of the data transmission link between the laser 12 and photodiode 18. In practice the BER generator 10 and the BER receiver 20 may be combined in a single piece of equipment.

A sinewave generator 22 supplies a sinusoidal modulation signal to a second laser 24 which generates an optical interference signal that is added to the optical output from the laser 12 by the optical combiner 16. The addition of the interference signal increases the BER of the data transmission link in a controlled manner, enabling a measurement of the increased BER to be accomplished in a time which is sufficiently short for the measurement to be useful. The actual, very low BER of the link (absent the interference signal) can then be estimated by extrapolation.

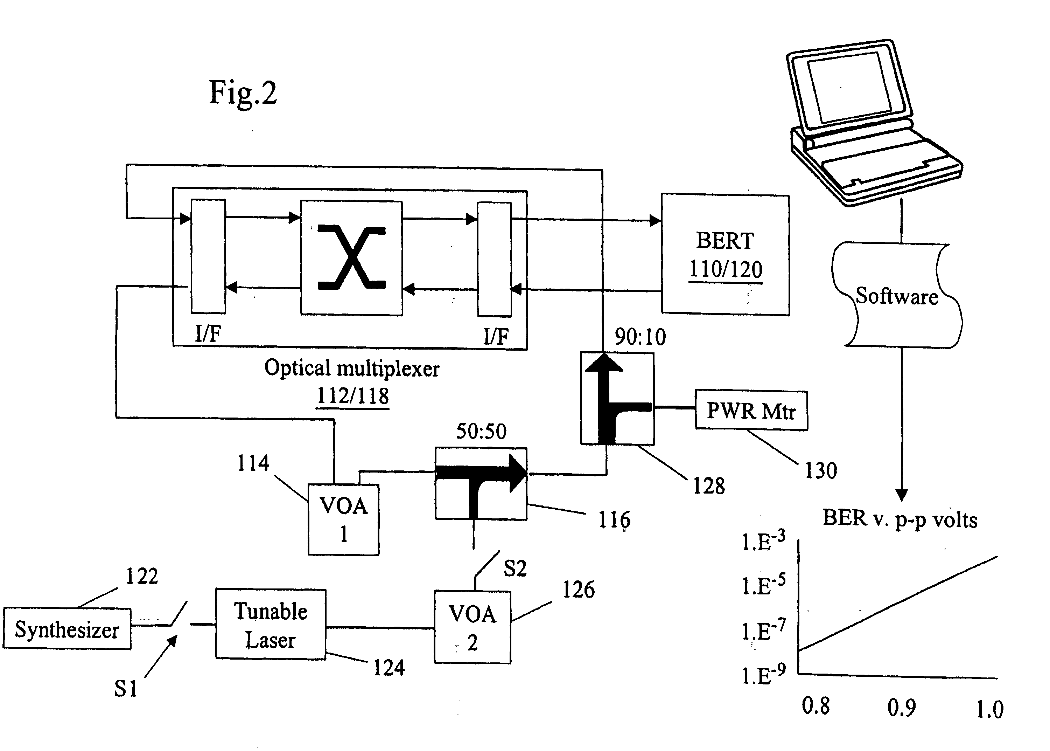

Figure 2 shows a modification, in accordance with this invention, of the arrangement of Figure 1, applied to the testing of an optical interface 112/118 of an optical multiplexer. Items in Figure 2 which correspond to those in Figure 1 have corresponding reference numerals, but increased by 100. In addition to these items, a switch S1 is interposed between the sinewave generator (synthesiser) 122 and the second laser 124. A second, variable optical attenuator (VOA) 126 is placed between the laser 124 and the optical combiner 116, and is coupled to the combiner by another switch S2. A 90:10 optical splitter 128 is inserted in the data transmission link, after the optical combiner 116, and feeds 10% of the optical signal power to a power meter 130. A 90:10 splitter is preferable to a 50:50 splitter, in order to minimise the signal loss in the main signal path.

The optical multiplexer is configured in "mirrored mode", such that data received on the input port being measured is regenerated and retransmitted out of another port of the multiplexer, with any bit errors being unaffected.

The modified arrangement can be used in two different ways: Method 1 (which is more complex) measures gain error introduced by the additional disturbing laser 124; Method 2 automatically cancels the gain error as part of the measurement process.

### Method 1

Method 1 sets the modulation applied to the second laser 124 to the desired level to give optimal extinction ratio in that light source (e.g. 10dB or better), and to operate the laser over the linear part of its characteristic: the modulation will be varied and must be proportional to the level from the synthesizer and the laser must not be allowed to turn all the way off or on. The second VOA 126 is adjusted till a high BER reading is obtained at the BERT 110/120 (typically 10⁻⁴). As a compromise between accuracy of extrapolation and speed of measurement, it is desirable to restrict the BER to this order of magnitude or lower. The modulation level is then set to four other values of peak-to-peak (p-p) volts yielding a BER between 10⁻⁴ and 10⁻⁸, giving a total of five points including that for 10⁻⁴. These five measurements of BER versus sinusoidal p-p amplitude are recorded for further computation. The number of points is chosen as a reasonable number to be able to draw a straight line in the Q domain.

Using this method it is necessary to compensate for any gain error in the opto-electrical conversion in the data transmission link receiver 118 caused by the disturbing laser. This is done by measuring the operating point (the power from the laser 112 alone which actually enters the receiver, i.e. with the disturbing laser 124 switched off) at a power level from the laser transmitter 112 which generates a high error ratio (say 10⁻⁴), and with switches S1 and S2 open. This measurement is compared with the operating point measured for a transmitter 112 power level which generates the same error ratio, but with S2 closed and S1 still open. This gain change is recorded for further computation of the complementary error function erfc.

In summary method 1 comprises the following steps:
1) With S2 open, set the attenuator 114 so that the operating point of the equipment under test is at the design operating value (by reference to the power meter 130). Close S1; adjust the synthesiser 122 to provide the maximum modulation of the laser 124, consistent with linear operation of the laser; record output level of the synthesiser 122. Close S2; adjust the attenuator 126 to yield an error ratio sufficiently high for rapid measurement, e.g. 10⁻⁴
2) Measure five values (or other suitable number) of BER vs p-p volts between 10⁻⁴ and 10⁻⁸, with S1 and S2 closed, by reducing the output level of the synthesiser 122 to obtain each successive BER value
3) Adjust the attenuator 114 to give an error ratio of 10⁻⁴ (or other suitable value) with S1 opened and S2 closed; measure and record the operating point
4) Adjust the attenuator 114 to give the same error ratio, with S1 and S2 open; measure and record the operating point

### Method 2

The second method has the same first step as Method 1. The sinusoidal amplitude of the drive signal for the laser transmitter 124 is then held constant for the remainder of the test. The second VOA 126 is now adjusted to obtain four more values of VOA2 setting which yield BERs between 10⁻⁴ and 10⁻⁸. giving a total of 5 points. The five measurements of BER versus attenuation are recorded for further computation.
1) With S2 open, set the attenuator 114 so that the operating point of the equipment under test is at the design operating value (by reference to the power meter 130). Close S1; adjust the synthesiser 122 to provide the maximum modulation of the laser 124, consistent with linear operation of the laser; record output level of the synthesiser 122. Close S2; adjust the attenuator 126 to yield an error ratio sufficiently high for rapid measurement, e.g. 10⁻⁴
2) Measure five values (or other suitable number) of BER vs attenuation (attenuator 126) between 10⁻⁴ and 10⁻⁸, with S1 and S2 closed, by increasing the attenuation of the attenuator 126 to obtain each successive BER value

The analysis of the measurements to derive an estimate of the actual link BER involves first deriving a value for the "Q factor" (a signal-to-noise value which is related to the BER) for each BER measurement, plotting Q factor vs interference signal strength, and extrapolating the plot and identifying the intercept for zero interference. This derivation is described in the paper by Palacharla et al cited above. In the case of Method 2 the attenuator settings must be converted to a linear measure related to the amplitude of the interference signal: the modulation level for step 1) is known, and the relative levels for the other BER measurements can be determined from the respective VOA2 setting relative to the VOA2 setting for step 1).

The residual error ratio (also known as background error ratio or dribbling error ratio) can be estimated from equations (2) or (7) in the paper by Palacharla et al. However the corresponding operating point measurements are different for the two methods. In the case of Method 1, the operating point to which the error ratio applies must be offset by the gain error determined at steps 3 and 4 above. This gain error is computed by subtracting the attenuator setting at step 4 from that at step 3, and is in turn subtracted from the operating point value. In the case of Method 2 the correction for the gain error is intrinsic to the method

The noise floor varies depending on the operating point of the measurement. A number of points can be measured to produce a plot of Q versus operating point. This plot can be used in a verification situation to ensure the characteristics of a product do not vary as a result of component tolerance or temperature. Thus it is not necessary to go back to plotting and extrapolating an erfc curve to ensure the measurement is within limits. A limit can be set directly in terms of Linear Q versus Power for a particular design.

### Interference light source 124

As described above, this can be a laser of similar wavelength to the laser in the network element 112/118 under test, but not exactly the same wavelength. Unless there is sufficient wavelength separation, a coherent light source (such as a laser) can cause interference beat frequency and amplitude products that may disturb the measurement accuracy. A minimum separation can be specified by correlating measurement accuracy versus wavelength separation, for example by empirical tests. An Optical Spectrum Analyser is used to ensure that an acceptable separation is achieved in practice.

Alternatively the interference signal source can be a light emitting diode (LED), for example for measurements at lower power levels.

### Modulation techniques

The modulation of the light source 124 must have several properties:
- The amplitude modulation scheme may be sinusoidal, as described, or it is envisaged that square wave or trapezoidal modulation may be used.
- The modulation is applied to the laser 124 using a synthesizer 122, which should be amplitude stabilised and of good harmonic performance (harmonics 40-50 dB down on the fundamental signal for a sine wave, or a signal with (sin x)/x characteristics for a square wave). Although it is desirable for the modulation waveform to be symmetrical about the mean, absolute symmetry is not believed to be a requirement.An external, optical-domain modulator can also be applied to the output of the light source and driven from a synthesizer.
- The extinction ratio (ratio in dB of maximum signal level to minimum signal level) of the light source must be at least 10dB. The effect of poor extinction ratio would be to reduce the gain of the disturbing light source.
- Sine-wave modulation must be linear, especially for Method 1, i.e. it must have low harmonic distortion. An opto-electrical converter and an oscilloscope can be used to check the distortion.
- Whatever modulation scheme is used, it must have good amplitude stability and linearity.
- The modulation frequency must be above any low frequency cut-off point of the receiver bandwidth, but not so high that any error opportunities are missed. The frequency should be asynchronous to the bit rate in the BER test signal so all error opportunities are exposed.
- The duration of the measurement should be such that all measurement opportunities are exposed at the relevant modulation frequency.

### Variable Optical Attenuator 1 (VOA1) 114

The VOA 114 simulates the worst case of network attenuation. However the effect of chromatic dispersion (CD) and polarisation mode dispersion (PMD) can be simulated by the replacement of some of the attenuation by optical cable as long as the operating point is known. Up to 85km of fibre (typically) on 2.5Gb/s systems can be inserted in this path. If a long link including repeater amplifiers is being simulated, iridium doped amplifiers can be included in the optical path traversed by the BERT test signals. Reflectance simulation kits can also be inserted into the line prior to the combiner 116.

### Variable Optical Attenuator 2 (VOA2) 126

This is set so that with the laser modulated for maximum extinction ratio (both methods) the error ratio for the system being tested is increased to about 1e-4

### Splitter 128

This optical splitter is used by optical power meter 130 to measure the input signal power to the receiver being tested (with S2 open). It can also be used for initial setting of the interfering source to a suitable power level when S2 is closed. The losses in the paths to the receiver input and power meter must periodically be measured and used in calibrating the system to ensure accurate reporting of the receiver input power. If a 90:10 splitter is used then the connector loss plus 1dB is typical in the line path, and connector loss plus 10dB in the path to the power meter.

### Power meter 130

This is calibrated by connecting the power meter 130 to the 90% output of the splitter 128, in place of the input to the optical multiplexer 112/118, with the switch S2 open. The power reading is noted, and then repeated with the power meter 130 reconnected to the 10% output of the splitter 128. The difference in the readings is used for calibrating the power meter readings in Method 1 and Method 2.

## Claims

1. A method of measuring bit error ratio of digital data transmission equipment, comprising the steps of:
applying a bit error ratio test data stream to a signal path through the equipment;
coupling an interfering signal source into the signal path;
acquiring a plurality of measurements of the bit error ratio of the equipment for a respective plurality of interfering signal levels; and
estimating the bit error ratio of the equipment in the absence of the interfering signal, from the plurality of measurements of the bit error ratio and incorporating compensation for gain error introduced by coupling the interfering signal source into the signal path.

2. The method of claim 1, including the step of determining the gain error introduced by coupling the interfering signal source into the signal path.

3. The method of claim 2, wherein the gain error is determined by:
making a first measurement of a power point of a receiver in the equipment for a predetermined bit error ratio, without the interfering signal source coupled to the signal path;
coupling the interfering signal source into the signal path; and
making a second measurement of a power point of the receiver for the predetermined bit error ratio.

4. The method of claim 1, wherein compensation for gain error is incorporated by:
making a first measurement of a power point of a receiver in the equipment for a predetermined bit error ratio, without the interfering signal source coupled to the signal path;
applying differing levels of attenuation to the interfering signal to produce differing levels of bit error ratio.

## Patentansprüche

1. Ein Verfahren zum Messen einer Bitfehlerrate einer digitalen Datenübertragungsausrüstung, das folgende Schritte aufweist:
Anlegen eines Bitfehlerrate-Testdatenstroms an einen Signalweg durch die Ausrüstung;
Koppeln einer Störsignalquelle in den Signalweg;
Erfassen einer Mehrzahl von Messungen der Bitfehlerrate der Ausrüstung für eine jeweilige Mehrzahl von Störsignalpegeln; und
Schätzen der Bitfehlerrate der Ausrüstung bei dem Nichtvorhandensein des Störsignals aus der Mehrzahl von Messungen der Bitfehlerrate und einer Aufnahme einer Kompensation eines Verstärkungsfehlers, der durch ein Koppeln der Störsignalquelle in den Signalweg eingebracht wird.

2. Das Verfahren gemäß Anspruch 1, das den Schritt eines Bestimmens des Verstärkungsfehlers umfasst, der durch das Koppeln der Störsignalquelle in den Signal eingebracht wird.

3. Das Verfahren gemäß Anspruch 2, bei dem der Verstärkungsfehler durch folgende Schritte bestimmt wird:
Vornehmen einer ersten Messung eines Leistungspunkts eines Empfängers in der Ausrüstung für eine vorbestimmte Bitfehlerrate, ohne dass die Störsignalquelle mit dem Signalweg gekoppelt ist;
Koppeln der Störsignalsquelle in den Signalweg; und
Vornehmen einer zweiten Messung eines Leistungspunkts des Empfängers für die vorbestimmte Bitfehlerrate.

4. Das Verfahren gemäß Anspruch 1, bei dem eine Kompensation für einen Verstärkungsfehler durch folgende Schritte aufgenommen wird:
Vornehmen einer ersten Messung eines Leistungspunkts eines Verstärkers in der Ausrüstung für eine vorbestimmte Bitfehlerrate, ohne dass die Störsignalquelle mit dem Signalweg gekoppelt ist;
Anlegen unterschiedlicher Dämpfungspegel an das Störsignal, um unterschiedliche Bitfehlerraten zu erzeugen.

## Revendications

1. Procédé de mesure du taux d'erreur d'un équipement de transmission de données numériques, comprenant les étapes consistant à :
• appliquer un flot de données de test de taux d'erreur de transmission à un parcours de signal à travers les équipements ;
• coupler une source de signal d'interférence dans le parcours de signal ;
• acquérir une pluralité de mesures du taux d'erreur de transmission des équipements pour une pluralité respective de niveaux de signal d'interférence ; et
• estimer le taux d'erreur de transmission des équipements en l'absence du signal d'interférence, à partir de la pluralité de mesures du taux d'erreur de transmission et incorporer une compensation pour l'erreur de gain introduite en couplant la source de signal d'interférence dans le parcours de signal.

2. Procédé selon la revendication 1, comprenant l'étape consistant à déterminer l'erreur de gain introduite en couplant la source de signal d'interférence dans le parcours de signal.

3. Procédé selon la revendication 2, dans lequel l'erreur de gain est déterminée en :
• effectuant une première mesure d'un point de puissance d'un récepteur dans les équipements pour un taux d'erreur de transmission prédéterminé, sans la source de signal d'interférence couplée au parcours de signal ;
• couplant la source de signal d'interférence dans le parcours de signal ; et
• effectuant une deuxième mesure d'un point de puissance du récepteur pour le taux d'erreur de transmission prédéterminé.

4. Procédé selon la revendication 1, dans lequel la compensation de l'erreur de gain est incorporée en :
• effectuant une première mesure d'un point de puissance d'un récepteur dans les équipements pour un taux d'erreur de transmission prédéterminé, sans la source de signal d'interférence couplée au parcours de signal ;
• appliquant différents niveaux d'atténuation au signal d'interférence pour produire différents niveaux de taux d'erreur de transmission.
